# EUROPÄISCHE PATENTANMELDUNG

(11) **EP 1 013 510 A2**
(43) Veröffentlichungstag der Anmeldung: **28.06.2000**
(21) Anmeldenummer: 99124881.6
(22) Anmeldetag: 16.12.1999
(51) Int. Cl.: B60R 16/02

(54) **Verfahren zur Anpassung von Parametern einer Steuereinheit eines Fahrzeuges**

(30) Priorität: 23.12.1998 DE 19860112
(71) Anmelder: Mannesmann VDO Aktiengesellschaft, 60388 Frankfurt am Main (DE)
(72) Erfinder: Feldmann, Rolf, 64859 Eppertshausen (DE)
(74) Vertreter: Klein, Thomas, Dipl.-Ing.

(57) **Zusammenfassung**

Bei einem Verfahren zur Anpassung von Parametern einer Steuereinheit an einen Fahrzeuginsassen werden in einem ersten Schritt individuelle Merkmale des Fahrzeuginsassen erfasst. Anschließend werden diese Merkmale anhand von Erfahrungswerten einer Klassifizierung zugeführt und die Parameter dementsprechend angepasst. Schließlich werden die Parameter an eine Ausgabeeinheit übermittelt, die entweder unmittelbar auf die Einstellung von Ausstattungselementen, wie beispielsweise die Sitze oder die Außenspiegel des Fahrzeuges einwirken oder an nachgeordnete Steuerungen, beispielsweise des Antriebes oder des Bremssystems weitergeleitet werden. Durch diese Verfahren ist es möglich, eine Anpassung an unterschiedliche Fahrzeuginsassen durchzuführen, ohne dass diese hierzu manuelle Eingriffe vornehmen müssen.

## Beschreibung

Die Erfindung betrifft ein Verfahren zur Anpassung von Parametern einer Steuereinheit eines Fahrzeuges an einen Fahrzeuginsassen.

Ein solches Verfahren wird bei heutigen Fahrzeugen eingesetzt, um eine früher von dem Fahrzeuginsassen vorgenommene Einstellung der Parameter zu einem späteren Zeitpunkt abzurufen und so den vorherigen Zustand wieder einzustellen. Beispielsweise sind in der Steuereinheit die Parameter einer elektrischen Sitzverstellung abgespeichert, so dass der Fahrzeuginsasse lediglich eine Codierung eingeben oder eine Auswahl aus einem Menü vornehmen muss. In ähnlicher Weise können auch individuelle Einstellungen für elektronisch steuerbare Fahrwerke oder zur Art und Darstellungsform von Anzeigen vorgenommen werden.

Zukünftige Bedienkonzepte werden eine zunehmende Anzahl von frei einstellbaren Parametern aufweisen, welche insbesondere der Verkehrssicherheit und dem Komfort dienen.

Nachteilig wirkt sich dabei aus, dass der Bediener zunächst eine Vielzahl dieser Parameter einstellen muss, um die für ihn richtige Einstellung zu finden. Dadurch ist der Fahrzeuginsasse häufig schon allein durch die Fülle der Einstellungsmöglichkeiten überfordert oder verliert schnell die Geduld, sich mit dem System auseinanderzusetzen. Manche Parameter werden sogar erst nach langer Betriebsdauer überhaupt bemerkt, so dass der Sinn dieser Parametereinstellung, die optimale Anpassung an den Fahrzeuginsassen, teilweise verloren geht. Dieses Problem tritt dann verstärkt auf, wenn das Fahrzeug lediglich vorübergehend genutzt wird, wie dies bei Fahrzeugen eines Fuhrparks oder einer Autovermietung der Fall ist, so dass eine individuelle Einstellung der Parameter mit unverhältnismäßig hohem Aufwand verbunden ist.

Der Erfindung liegt das Problem zugrunde, ein Verfahren der eingangs genannten Art so zu gestalten, dass eine Anpassung der Parameter der Steuereinheit an einen Fahrzeuginsassen vorgenommen werden kann, ohne dass dieser hierzu einen manuellen Eingriff vornehmen muss. Hierbei soll auch dann eine entsprechende Anpassung möglich sein, wenn der Fahrzeuginsasse das Fahrzeug erstmalig benutzt.

Dieses Problem wird erfindungsgemäß dadurch gelöst, dass zunächst mittels der Steuereinheit individuelle Merkmale des Fahrzeuginsassen erfasst und einer Klassifizierung zugeführt werden und dass anschließend die Anpassung der Parameter auf Basis dieser Klassifizierung vorgenommen wird. Durch die Klassifizierung des Fahrzeuginsassen anhand von individuellen Merkmalen kann dieser einem speziellen Personentypus zugeordnet werden. Dabei ist es nicht erforderlich, zuvor die Identität des Fahrzeuginsassen zu erfassen, sondern es kann eine Anpassung auf der Basis von Erfahrungswerten vorgenommen werden. Die zur Klassifizierung erforderlichen Merkmale werden hierzu von der Steuereinheit erfasst, ohne dass der Fahrzeuginsasse hierzu aktiv beitragen oder manuelle Eingriffe vornehmen muss. Die Anpassung der Parameter stellt dabei lediglich eine Voreinstellung dar, die vom Fahrer beliebig abgeändert werden kann. Befindet sich der Fahrzeuginsasse nur kurzzeitig in dem Fahrzeug, so erfüllt die Voreinstellung die Anforderungen des Fahrzeuginsassen weitgehend und trägt so insbesondere zu erhöhter Fahrsicherheit und gesteigertem Komfort bei.

Eine Weiterbildung des erfindungsgemäßen Verfahrens ist dadurch besonders vorteilhaft, dass mittels der Steuereinheit als Merkmal die Anatomie des Fahrzeuginsassen erfasst wird. Hierdurch ist es möglich, eine körpergerechte und damit komfortable Einstellung vorzunehmen, die hierzu beispielsweise das Körpergewicht und die Größe erfasst. Auf Basis dieser Merkmale kann dann zum Beispiel eine Anpassung von Parametern für eine elektrische Sitzverstellung, die Einstellung von Spiegeln oder die Ausrichtung einer Anzeige vorgenommen werden. Dabei wird eine ergonomisch weitgehend korrekte Anpassung vorgenommen, in die medizinische Erkenntnisse einfließen, so dass oftmals eine manuelle Einstellung übertroffen werden kann.

Eine andere vorteilhafte Ausführungsform der Erfindung ist dann gegeben, wenn die Merkmale von der Bediengeschwindigkeit oder den zeitlichen Abständen zwischen einzelnen Bedienvorgängen des Fahrzeuginsassen abgeleitet werden. Hieraus kann eine Klassifizierung des Fahrzeuginsassen erfolgen, die insbesondere einer bevorzugten komfortorientierten oder sportlichen Anpassung und den Erwartungen an das Fahrzeug folgt. Dabei führt eine langsame Betätigung der Bedienelemente, die zudem in einem großen zeitlichen Abstand erfolgt, zu einer komfortablen Klassifizierung. Eine entsprechende Anpassung der Parameter ermöglicht beispielsweise eine entsprechende Abstimmung der Schaltstufen eines automatischen Getriebes.

Ähnliche Rückschlüsse lässt dabei auch eine andere Weiterbildung der Erfindung zu, bei der als Merkmal die Betätigungskraft einzelner Bedienelemente erfasst wird. Aus einer mittels der Steuereinheit erfassten, hohen Betätigungskraft kann beispielsweise auf eine "sportliche" Fahrweise geschlossen werden. Eine entsprechende Anpassung der Parameter für das Bremssystem und das Fahrwerk sind daraus ableitbar. Ferner ist darüber hinaus auch eine Zuordnung eines speziellen Radiosenders bzw. der Musikanlage möglich.

Besonders sinnvoll ist hierbei eine Weiterbildung der Erfindung, bei der die Merkmale mehrerer Fahrzeuginsassen, insbesondere eines Fahrers und eines Beifahrers, unabhängig voneinander erfasst werden. Diese unabhängige Einstellung ist vor allem unter ergonomischen Gesichtspunkten für eine günstige Sitzposition hilfreich. Beispielsweise kann dadurch auch eine Anpassung der Parameter rückwärtiger Fahrzeugsitze vorgenommen und so bei einem Taxifahrzeug für den Fahrgast eine geeignete Einstellung erreicht werden. Diese Einstellung kann insbesondere auch lediglich vom Fahrer aus veränderbar sein, so dass eine fehlerhafte Bedienung ausgeschlossen werden kann und dennoch eine wesentlich verbesserte Einstellung erreicht wird.

Eine besonders vorteilhafte Ausführungsform der Erfindung ist auch dann gegeben, wenn nach der erfolgten Anpassung der Parameter weitere Merkmale erfasst werden und anschließend auf der Basis dieser Merkmale eine überprüfung der Klassifizierung erfolgt. Dadurch wird es möglich, die zunächst vorgenommene Klassifizierung zu kontrollieren und gegebenenfalls zu verändern. Dadurch wird eine exakte Anpassung der Parameter während der Betriebsdauer möglich, die hierzu keinen manuellen Eingriff des Fahrzeuginsassen erfordert. Dabei können auch einander widersprechende Merkmale, die zu einer fehlerhaften Klassifizierung führen könnten, erkannt und so aufgrund weiterer erfasster Merkmale einer korrekten Klassifizierung zugeführt werden.

Besonders günstig ist es auch, wenn mittels der Steuereinheit eine Anpassung der Informationsdarstellung vorgenommen wird. So kann beispielsweise aufgrund der Häufigkeit der betätigten Bedienelemente eine hervorgehobene Anordnung der entsprechenden Informationsebenen erfolgen. Auch eine veränderte Größendarstellung oder spezielle Anzeigen und Warnhinweise für spezielle Fahrertypen sind möglich.

Eine andere besonders empfehlenswerte Ausführungsform der Erfindung ist auch dadurch gegeben, dass mittels der Steuereinheit eine Anpassung der Fahrdynamik vorgenommen wird. Dem Fahrer wird daher ein spezielles, auf die zuvor vorgenommene Klassifizierung abgestimmtes Fahrgefühl vermittelt. Dies betrifft insbesondere die Lenkung und das Fahrwerk, aber auch die Schaltung und die Motorsteuerung. Hierdurch kann unterschiedlichen Fahrern ein voneinander stark abweichendes Fahrgefühl vermittelt und so verschiedene Ansprüche gänzlich unterschiedlicher Fahrer vom diesen unbemerkt erfüllt werden.

Besonders hilfreich ist es dabei auch, wenn eine manuelle Veränderung der Parameter von der Steuereinheit erfasst wird und diese Veränderung bei einer später vorzunehmenden Klassifizierung einfließt. Eine solche "lernfähige" Steuereinheit ermöglicht neben einer optimierten Anpassung auch eine hierarchische Abstufung und damit die Einführung weiterer Stufen der Klassifizierung mit entsprechend abgeänderten Parametern. Die gewünschte Anpassung der Parameter kann dadurch wesentlich genauer auf die individuellen Erfordernisse abgestimmt werden.

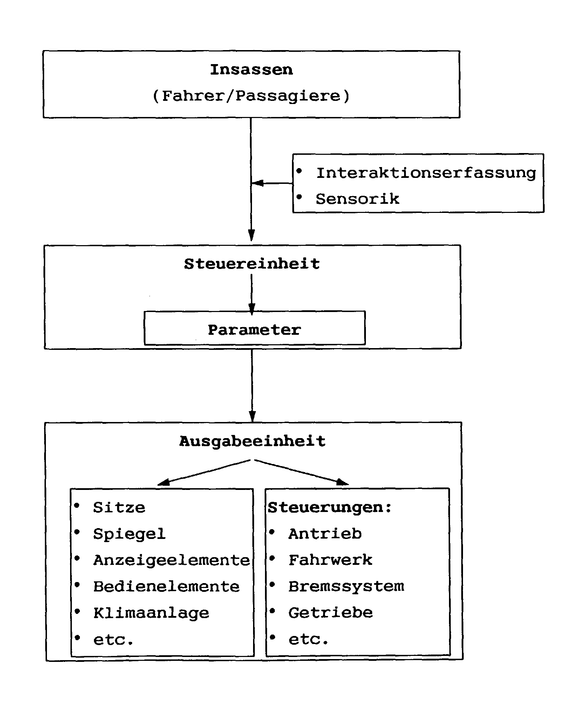

Die Erfindung lässt verschiedene Ausführungsformen zu. Zur weiteren Verdeutlichung ihres Grundprinzips ist eine davon in der Zeichnung dargestellt und wird nachfolgend beschrieben. Diese zeigt eine Flussdarstellung des erfindungsgemäßen Verfahrens.

Bei dem erfindungsgemäßen Verfahren werden in einem ersten Schritt zunächst individuelle Merkmale des Fahrzeuginsassen, des Fahrers oder möglicher Passagiere von der Steuereinheit erfasst. Hierzu dient einerseits eine eigens hierfür vorgesehene Sensorik, beispielsweise zur Erfassung des Körpergewichtes des Fahrzeuginsassen, andererseits werden aber auch Bedienvorgänge des Fahrzeuginsassen erfasst und so beispielsweise die Bedienungsabfolge und die hierzu benötigte Zeit, die Art und Weise der Pedalbetätigung oder die zum Einsteigen in das Fahrzeug erforderliche Zeit auf der Basis von Tür- und Sitzsensoren erfasst.

Im zweiten Schritt werden die so gewonnenen Merkmale mittels der Steuereinheit ausgewertet und einer Klassifizierung, insbesondere auf der Basis von Erfahrungswerten, zugeführt.

Die vorgenommene Klassifizierung ermöglicht eine Zuordnung zu einem Fahrzeuginsassen-Typus und führt in einem weiteren Schritt zur Anpassung verschiedener, in der Steuereinheit enthaltener Parameter, die hierzu in einem Speicherelement der Steuereinheit ablegbar sind. Diese Parameter werden schließlich in einem weiteren Schritt als Steuerbefehl an eine Ausgabeeinheit weitergeleitet. Die Ausgabeeinheit leitet dann die entsprechenden Befehle an weitere Steuerungen, welche wiederum beispielsweise auf einen Antrieb, ein elektronisches Fahrwerk, ein Bremssystem etc. einwirken oder wirkt unmittelbar auf die Einstellung der entsprechenden Bauteile ein. Auf diese Weise können beispielsweise Bedienelemente, Sitze oder Außenspiegel oder auf die Fahrzeuginsassen abgestimmte Anzeigeelemente in einer bestimmten Priorität angeordnet werden. Dem Fahrzeuginsassen bleibt es dennoch unbenommen, nach der durch die Steuereinheit vorgenommenen Anpassung der Parameter beliebige manuelle Änderungen der Parameter vorzunehmen. Diese können beispielsweise auch auf die Klassifizierung zurückwirken und so bei später vorzunehmenden Klassifizierungen berücksichtigt werden.

## Patentansprüche

1. Verfahren zur Anpassung von Parametern einer Steuereinheit eines Fahrzeuges an einen Fahrzeuginsassen, **dadurch gekennzeichnet**, dass zunächst mittels der Steuereinheit individuelle Merkmale des Fahrzeuginsassen erfasst und einer Klassifizierung zugeführt werden und dass anschließend die Anpassung der Parameter auf Basis dieser Klassifizierung vorgenommen wird.

2. Verfahren nach Anspruch 1, **dadurch gekennzeichnet**, dass mittels der Steuereinheit als Merkmal die Anatomie des Fahrzeuginsassen erfasst wird.

3. Verfahren nach Anspruch 1 oder 2, **dadurch gekennzeichnet**, dass die Merkmale von der Bediengeschwindigkeit oder den zeitlichen Abständen zwischen einzelnen Bedienvorgängen des Fahrzeuginsassen abgeleitet werden.

4. Verfahren nach zumindest einem der vorhergehenden Ansprüche, **dadurch gekennzeichnet**, dass als Merkmal die Betätigungskraft einzelner Bedienelemente erfasst wird.

5. Verfahren nach zumindest einem der vorhergehenden Ansprüche, **dadurch gekennzeichnet**, dass die Merkmale mehrerer Fahrzeuginsassen, insbesondere eines Fahrers und eines Beifahrers, unabhängig voneinander erfasst werden.

6. Verfahren nach zumindest einem der vorhergehenden Ansprüche, **dadurch gekennzeichnet**, dass nach der erfolgten Anpassung der Parameter weitere Merkmale erfasst werden und anschließend auf der Basis dieser Merkmale eine Überprüfung der Klassifizierung erfolgt.

7. Verfahren nach zumindest einem der vorhergehenden Ansprüche, **dadurch gekennzeichnet**, dass mittels der Steuereinheit eine Anpassung der Informationsdarstellung vorgenommen wird.

8. Verfahren nach zumindest einem der vorhergehenden Ansprüche, **dadurch gekennzeichnet**, dass mittels der Steuereinheit eine Anpassung der Fahrdynamik vorgenommen wird.

9. Verfahren nach zumindest einem der vorhergehenden Ansprüche, **dadurch gekennzeichnet**, dass eine manuelle Veränderung der Parameter von der Steuereinheit erfasst wird und diese Veränderung bei einer später vorzunehmenden Klassifizierung einfließt.
